# EUROPEAN PATENT APPLICATION

(11) **EP 4 068 458 A1**
(43) Date of publication of application: **05.10.2022**
(21) Application number: 20929778.7
(22) Date of filing: 26.11.2020
(51) Int. Cl.: H01M 10/0587, H01M 50/26, H01M 10/0525

(54) **CONTACT PIN ASSEMBLY FOR CENTER HOLE OF BATTERY CELL**

(30) Priority: 06.04.2020 CN 202020484251 U; 06.04.2020 CN 202010262232
(71) Applicant: Tianjin Lishen Battery Joint-Stock Co., Ltd., Tianjin 300384 (CN)
(72) Inventor: YA, Yuanyuan, Tianjin 300384 (CN); LI, Wei, Tianjin 300384 (CN); WANG, Nianju, Tianjin 300384 (CN); JIA, Xueheng, Tianjin 300384 (CN); LIU, Gang, Tianjin 300384 (CN)
(74) Representative: Lermer, Christoph
(86) International application number: PCT/CN2020/131696
(87) International publication number: WO 2021/203716

(57) **Abstract**

The disclosure provides a pin assembly for a cell. The cell includes an electrode assembly comprising a central hole, and the pin assembly includes a housing, at least one electrode lead, and an insulating part. The housingincludes a tube including a top opening and a bottom opening. The tube is disposed in the central hole of the cell. The insulating part is fully or partially disposed in the tube. The at least one electrode lead penetrates through the insulating part; a lower end ofthe at least one electrode lead is electrically connected to a positive electrode and/or a negative electrode of the cell, thereby leading out the polarity of the cell.

## Description

### CROSS-REFERENCE TO RELATED APPLICATIONS

This application is a continuation-in-part of International Patent Application No. PCT/CN2020/131696 with an international filing date of Nov. 26, 2020, designating the United States, now pending, and further claims foreign priority benefits to Chinese Patent Application No. 202010262232.X filed Apr. 6, 2020, and to Chinese Patent Application No. 202020484251.2 filed Apr. 6, 2020. The contents of all of the aforementioned applications, including any intervening amendments thereto, are incorporated herein by reference. Inquiries from the public to applicants or assignees concerning this document or the related applications should be directed to: Matthias Scholl PC., Attn.: Dr. Matthias Scholl Esq., 245 First Street, 18th Floor, Cambridge, MA 02142.

### TECHNICAL FIELD

The disclosure relates to a part of a battery cell, and more particularly to a pin assembly for a battery cell.

### BACKGROUND

With long cycle life, good rate capability, safety, reliability, and environmental friendliness, lithium-ion cells are widely used in various energy storage products, consumer electronic products, and power cell products. According to the manufacturing process, lithium-ion cells can be divided into soft wrapped lithium-ion cells, square aluminum shell cells and steel shell cylindrical cells. Among them, the steel shell cylindrical cells are widely used in power vehicle because of its highly standardized manufacturing process and low cost. As a rapidly developing new energy industry, under the fierce market competition, customers have higher and higher requirements for the energy density and appearance of the cell.

At present, the electrode assembly of the cylindrical cells is formed through winding or lamination process. It has been found that in the field of cylindrical battery, the space utilization of the cell produced by winding process is much better than that by lamination process. When a cylindrical electrode assembly is formed through winding, a central hole caused by placing the winding needle will inevitably be left, and the diameter of the hole is generally greater than 1 mm. On the one hand, the central hole wastes the cell space. On the other hand, the existence of the central hole may also lead to the collapse of the electrode assembly during use. Therefore, to stabilize the structure, a pin is disposed in the central hole of the electrode assembly of most cylindrical cells. In general, the pin is a metal tube.

Conventionally, the cylindrical cell includes a U-shaped metal bottom shell and alinear top cover. The bottom shell and the top cover are sealed and connected to each other through an insulating rubber ring and an edging process, and the electrode assembly with a central needle is disposed in the cavity formed by the bottom shell and the top cover. In the cylindrical cell with this structure, the central pin occupies the space of the central hole so as to stabilize the electrode assembly. In this way, the cylindrical cells must provide other part for the separation of cell polarity. For example, the positive and negative electrodes of the traditional 18650 and 21700 cylindrical cells are the bottom shell and the shell cover of the cells, respectively. The separation of the positive and negative electrodes is realized by sealing the shell cover with an insulating rubber ring through the edging process. The above structure occupies about 4 - 6 mm length of the cell, which leads to 5.7% - 10% space waste. As a result, when the height of the cell is reduced, the energy density decreases sharply. Therefore, for the cylindrical cell (button cell) with small height, the polarity separation of the cell is designed along the radial direction. The positive and negative electrodes of this kind of cell are connected to the bottom shell and the shell cover respectively. The bottom shell is secured to the shell cover coaxially, and the middle part therebetween is filled with an insulating layer for polarity separation. The polar separation structure is in the outermost ring of the cell (refer to patent ZL201080007121.9). This structure needs to occupy about 0.6 mm space of the outermost ring of the circular section. For cells with a diameter of 8 - 20 mm, the design leads to 6% - 15% space waste.

In conclusion, the space distribution of conventional cylindrical cells is unreasonable, and the center pin and battery polarity separation occupy part of the cell space respectively, which adversely affects the improvement of cell energy density.

### SUMMARY

To solve the aforesaid problems, one objective of the disclosure is to provide a pin assembly for a cell. The pin assembly has the function of a traditional pin assembly, can realize the separation of the polarity of the cell, and can save the space originally used in a traditional pin assembly for the separation of the polarity of the cell, thus improving the energy density of the cell.

To achieve the aforesaid objective, the disclosure provides a pin assembly for a cell, the cell comprising an electrode assembly comprising a central hole, and the pin assembly comprising a housing, at least one electrode lead, and an insulating part. The housingcomprises a tube comprising a top opening and a bottom opening; the tube is disposed in the central hole of the cell; the insulating part is fully or partially disposed in the tube; the at least one electrode lead penetrates through the insulating part; a lower end ofthe at least one electrode lead is electrically connected to a positive electrode and/or a negative electrode of the cell, thereby leading out the polarity of the cell.

In a class of this embodiment, the housing has a longitudinal section in the shape of "┐┌" and further comprises a disc-shaped flange extending outwardly from a top of the tube.

In a class of this embodiment, the housing has a longitudinal section in the shape of " 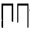 " and further comprises two circular tubes extending outwardly from two ends of a top of the tube.

In a class of this embodiment, the housing has a longitudinal section in the shape of "II". Optionally, the longitudinal section of the housing is not limited to the abovementioned three shapes. The housing can extend outward from one end of the upper end of the columnar part to form a shape between"||", "┐┌", and " 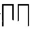 ".

In a class of this embodiment, the cell comprises at least one positive electrode, at least one negative electrode, and at least one diaphragm separating the at least one positive electrode from the at least one negative electrode; the at least one positive electrode, the at least one negative electrode and the at least one diaphragm are disposed around the central hole in a spiral winding manner; and the central hole has a diameter of greater than 0 and smaller than that of the cell.

In a class of this embodiment, the pin assembly is hermetically connected to a cell housing, thus forming a ring-shaped seal cavity for accommodating the electrode assembly.

In a class of this embodiment, the insulating part has a longitudinal section in the shape of " 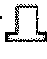 ", and comprises a columnar part inserted into the tube and an end cap that extends outwardly from a bottom of the columnar part to fully cover a lower end of the tube.

In a class of this embodiment, thepin assembly further comprises a liquid injection hole through which an electrolyte flows into the cell.

In a class of this embodiment, the liquid injection hole is disposed on the pin assembly and/or on the insulating part.

In a class of this embodiment, the liquid injection hole penetrates through the insulating part, and is positioned at a center or eccentric position of the insulating part; and the liquid injection hole is sealed by a sealing member.

In a class of this embodiment, the sealing member adopts one of the following structures:
the sealing member comprises an end cap structure; the end cap structure comprises an end and an embedded part disposed at the lower end of the end; the end covers the tube, and the embedded part is disposed in the tube; and
the sealing member comprises at least one steel ball; the at least one steel ball is disposed in the liquid injection hole in an interference fit.

In a class of this embodiment, the pin assembly comprises a waterproof material.

In a class of this embodiment, thewaterproof material is a metal material or a non-metal material.

In a class of this embodiment, the metal material is stainless steel, aluminum, or aluminum alloy.

In a class of this embodiment, thenon-metal material is ceramic or plastic.

In a class of this embodiment, the insulating part comprises polypropylene.

In a class of this embodiment, the at least electrode lead comprises an aluminum sheet or a nickel sheet.

The pin assembly of the disclosure is particularly suitable for a cylindrical lithium-ion cell. The pin assembly is hermetically connected to the cell housing to form a ring-shaped seal cavity for accommodating the electrode assembly. Thetwo ends of the electrode leadcomprise contact terminals for circuit expansion, and are configured to be electrically connected to the positive electrode and/or negative electrode of the cell to realize the leading out of the polarity of the cell.

The pin assembly is fully or partially inserted into the central hole of the electrode assembly. For the leading out of the polarity of the cell, the insulating part is fully or partially disposed in the tube; the electrode lead penetrates through the insulating part. In this way, the polarity of the positive electrode and/or negative electrode of the cell can be led out through the electrode lead, and the polarity separation of the cell is achieved through the insulating part in the central hole of the cell, thus avoiding the occupation of the limited space of the cell. The insulating part is generally plastic, and the insulating materialis preferably added to the inside of the cylindrical tube through injection molding process.

The pin assembly of the disclosure is exposed to the operating environment of the cellto lead out the polarity of the cell, which is totally different from the traditional pin assembly. The traditional pin assembly is finally sealed with the electrode assembly in the cell.

Because a part of the pin assembly is disposed inside the electrode assembly and another part is exposed to the operating environment of the cell, it is required that the pin assembly must be waterproof and have the ability to expand to form a confined space, and the original surface corresponding to the pin assembly always corresponds to the electrode group after expansion. In actual use, the cell housing will complete this expansion function. Therefore, the pin assembly is designed to be sealed and connected with the cell housing to form an annular cavity. In addition, the liquid injection hole is disposed on the insulating part, or is arranged in the center or in an eccentric position of the insulating part. The liquid injection hole will be sealed by the sealing member after the liquid injection is completed during the manufacturing of the cell.

The polarity leading out function of the pin assembly of the cell is realized by presetting the electrode lead in the insulating part of the tube. Two ends of the electrode lead comprise contact terminals for circuit expansion. The contact terminals abutting against the inside of the cell are electrically connected to the positive or negative electrode of the cell, and the contact terminals exposed out of the cell are electrically connected to an external power supply or an interface. In general, an aluminum sheet and a nickel sheet can be preset as the electrode lead in the tube. When assembling the cell, the positive sheet of the cell is electrically connected to the aluminum sheet directly or through a conductor, and the negative sheet of the cell is electrically connected to the nickel sheet directly or through the conductor. Thus, the aluminum sheet and the nickel sheet function the positive and negative electrodes of the cell, respectively. To reduce the size of the tube, a metal sheet (such as aluminum sheet or nickel sheet) can also be preset. When assembling the cell, the positive electrode or negative electrode of the cell is electrically connected to the aluminum sheet directly or through a conductor, and the metal (such as stainless steel) shell is electrically connected to the negative electrode of the cell. The aluminum sheet is the positive electrode of the cell and the metal shell is the negative electrode of the cell.

### BRIEF DESCRIPTION OF THE DIAGRAMS

FIG. **1** is a schematic diagram of a pin assembly of Example **1** of the disclosure;
FIG. **2** is a schematic diagram of a pin assembly of Example **2** of the disclosure;
FIG. **3** is a schematic diagram of a pin assembly of Example **3** of the disclosure;
FIG. **4** is a schematic diagram of a pin assembly of Example **4** of the disclosure;
FIG. **5** is a schematic diagram of a pin assembly of Example **4** of the disclosure;
FIG. **6** is a schematic diagram of a sealing member of the disclosure;
FIG. **7** is another schematic diagram of a sealing member of the disclosure;
FIG. **8** is a schematic diagram of a cell comprising a pin assembly of the disclosure; and
FIG. **9** is another schematic diagram of a cell comprising a pin assembly of the disclosure.

### DESCRIPTION OF THE INVENTION

To further illustrate, embodiments detailing acell are described below. It should be noted that the following embodiments are intended to describe and not to limit the disclosure.

### Example 1

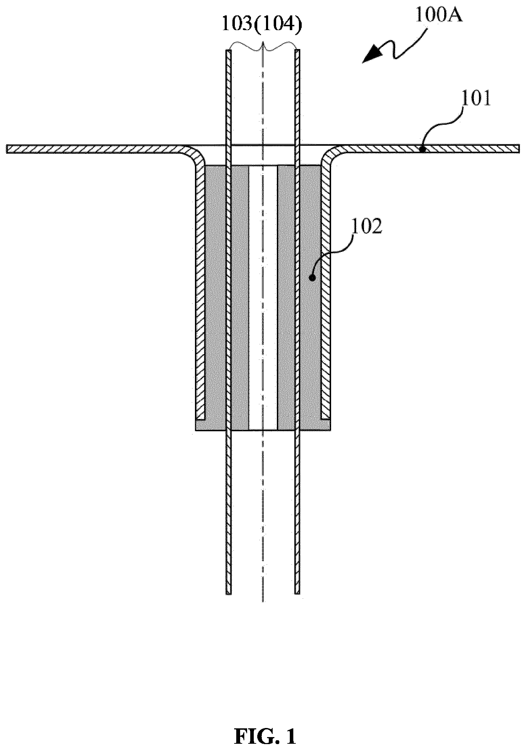

As shown in FIG. **1****,** a pin assembly **100A**for a cell comprises a housing **101,** a positive electrode lead **103,** and a negative electrode lead **104**,andan insulating part **102.**

The housing **101** has a longitudinal section in the shape of "┐┌" and comprises a tube comprising a top opening and a bottom opening, and a disc-shaped flange extending outwardly from the top of the tube. The tube is disposed in a central hole of an electrode assembly of the cell. The insulating part **102** is partially disposed in the tube. The positive electrode lead **103** and the negative electrode lead **104** penetrate through the insulating part **102.** The lower ends of the positive electrode lead **103** and the negative electrode lead 104are soldered to the positive electrode and/or the negative electrode of the cell, respectively, thereby leading out the polarity of the cell.

The insulating part**102** has a longitudinal section in the shape of " 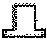 ", and comprises a columnar part inserted into the tubeof the housing **101**and an end cap that extends outwardly from the bottom of the columnar part to fully cover the lower end of the tube of the housing **101.**

The positive electrode lead **103** and the negative electrode lead **104** comprise an aluminum sheet or a nickel sheet.

Aliquid injection hole is disposed on the insulating part **102.** The liquid injection hole penetrates through the insulating part, and is positioned at the center or eccentric position of the insulating part.

It should be noted that the dimensions of the pin assembly **100A** and the electrode leads are determined according to the conventional knowledge of the person skilled in the art, and are not described in detail again.

During process, the lower ends of the positive electrode lead **103** and the negative electrode lead **104** extend beyond the tube of the housing **101,** and the upper ends extend beyond the disc-shaped flange. The insulating part **102** is injected into the tube by template injection molding. Preferably,

the insulating part **102** is made of polypropylene. Finally, the positive electrode lead **103** and the negative electrode lead **104** in the tube are completely wrapped. At the same time, a through hole is formed in the center or eccentric of the tube, that is, the liquid injection hole. The outer wall of the insulating part **102** is tightly combined with the inner wall of the tube, and the positive electrode lead **103** and the negative electrode lead **104** are symmetrically disposed in the insulating part **102.**

### Example 2

The example is modified based on Example **1,** which is basically the same as Example 1 except for the structure of the housing **101.**

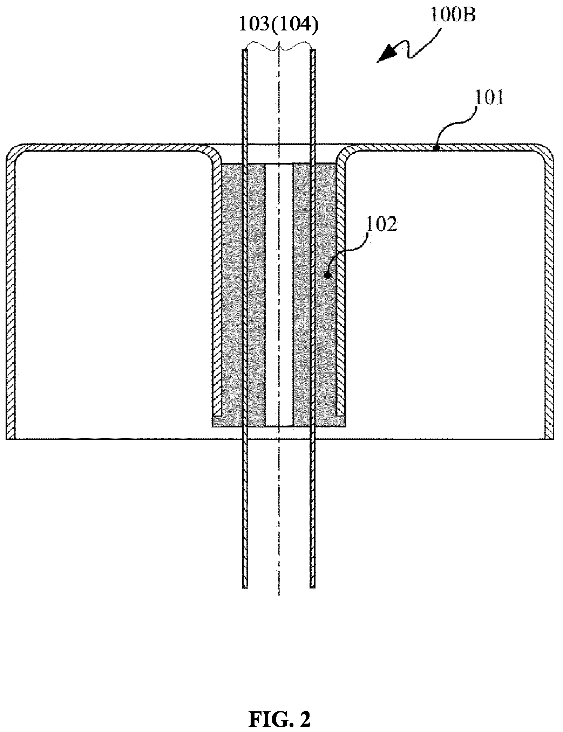

Specifically, as shown in FIG. **2****,** the housing **101**of the pin assembly **100B** for a cell has a longitudinal section in the shape of " 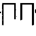 " and comprises a tube comprising a top opening and a bottom opening, and two circular tubes extending outwardly from two ends of the top of the tube.

### Example 3

The example is modified based on Examples**1-2**, which is basically the same as Examples**1-2** except for the structure of the housing **101.**

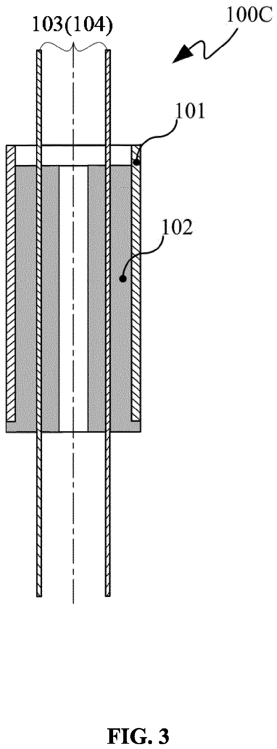

Specifically, as shown in FIG. **3****,** the housing **101** of the pin assembly **100C** for a cell has alongitudinal section in the shape of "II" and comprises a circular tube comprising a top opening and a bottom opening.

### Example 4

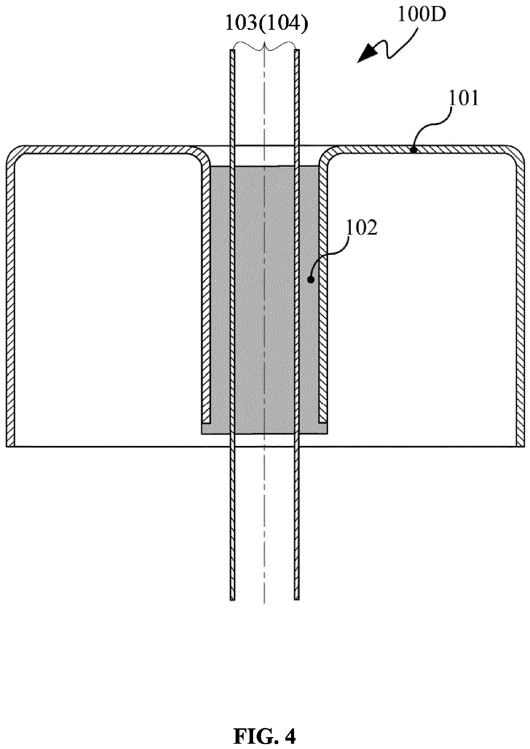

The example is modified based on Example **1,** which is basically the same as Example **1** except for the structure of the insulating part **102.** Specifically, as shown in FIG. **4****,** no liquid injection hole is disposed on the insulating part **102** of the pin assembly **100D.** Optionally, in Examples **2-3,** the insulating part **102** is also provided with no liquid injection hole, and the liquid injection hole is disposed on other part of the cell.

### Example 5

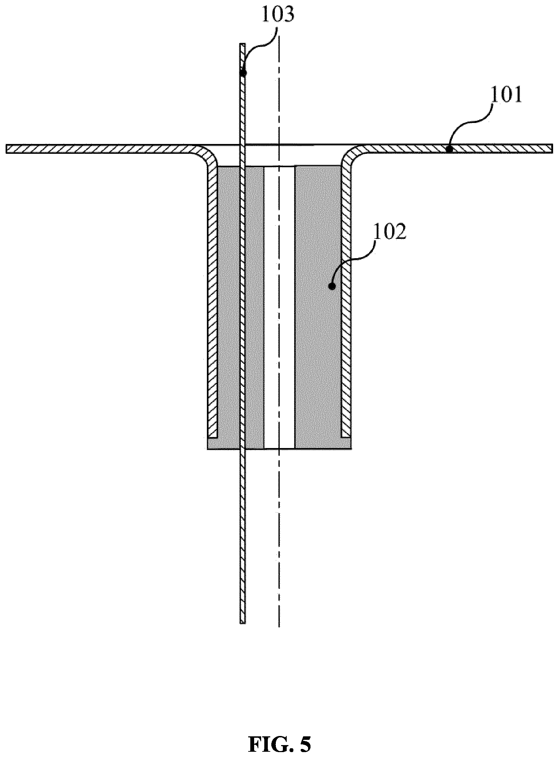

The example is modified based on Example **1,** which is basically the same as Example **1** except that, as shown in FIG. **5****,** only one electrode lead is led out from the pin assembly. The electrode lead is a positive electrode lead **103** or a negative electrode lead **104.**

Optionally, in Examples **2-4,** modification such as only one electrode lead is disposed on the pin assembly, which is not detailed any more.

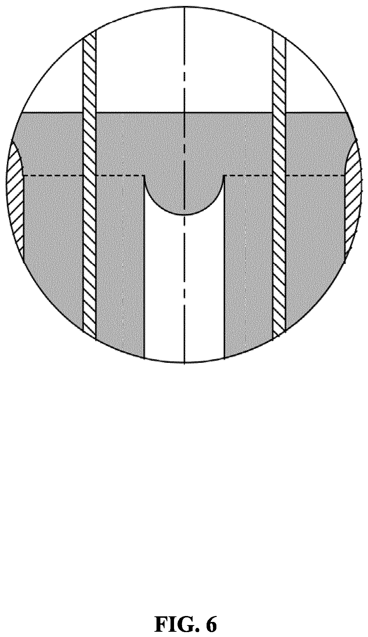

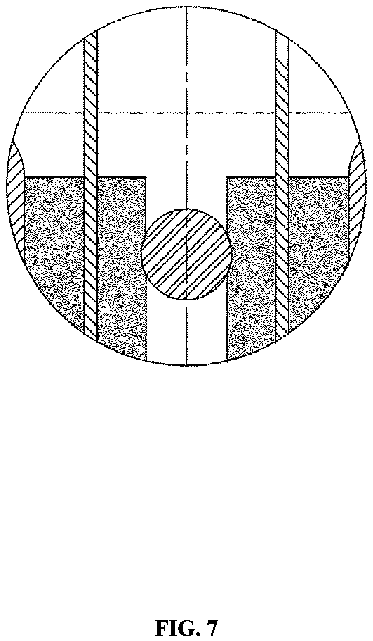

Optionally, in Examples **1, 2, 3** and **5,** the liquid injection hole is disposed on the insulating part **102** of the pin assembly. Furthermore, the liquid injection hole is sealed by a sealing member. The sealing member adopts one of the following structures:
1. As shown in FIG. **6****,** the sealing member comprises an end cap structure; the end cap structure comprises an end and an embedded part disposed at the lower end of the end; the end covers the upper part of the tube, and the embedded part is disposed in the tube; and
2. As shown in FIG. **7****,** the sealing member comprises at least one steel ball; the at least one steel ball is disposed in the liquid injection hole in an interference fit.

The cell house matched with the housing of the pin assembly in Example **2**has a longitudinal section in the shape of "-". The cell house is spliced to or integrally formed with the housing.

The cell house matched with the housing of the pin assembly in Example **3** has a longitudinal section in the shape of " 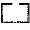 ". The cell house is spliced to or integrally formed with the housing.

The cell house is hermetically connected to the housing, thus forming a ring-shaped seal cavity for accommodating the electrode assembly.

Optionally, the pin assembly comprises a waterproof material. The waterproof material is a metal material or a non-metal material. The metal material is stainless steel, aluminum, or aluminum alloy. The non-metal material is ceramic or plastic.

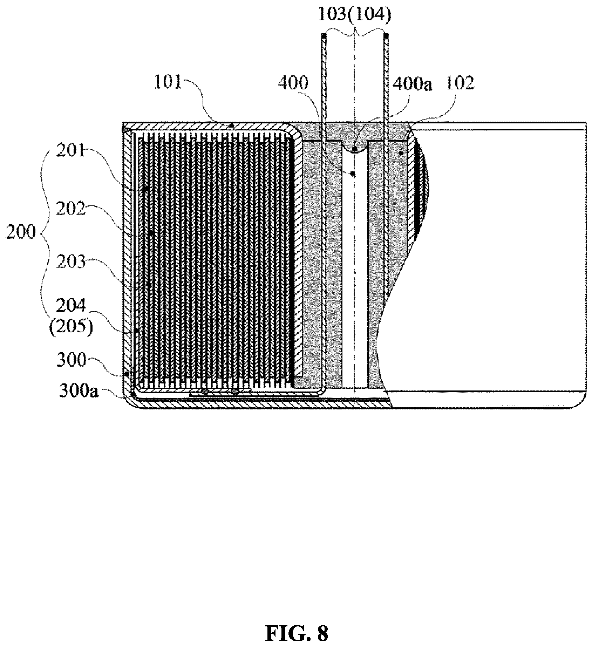

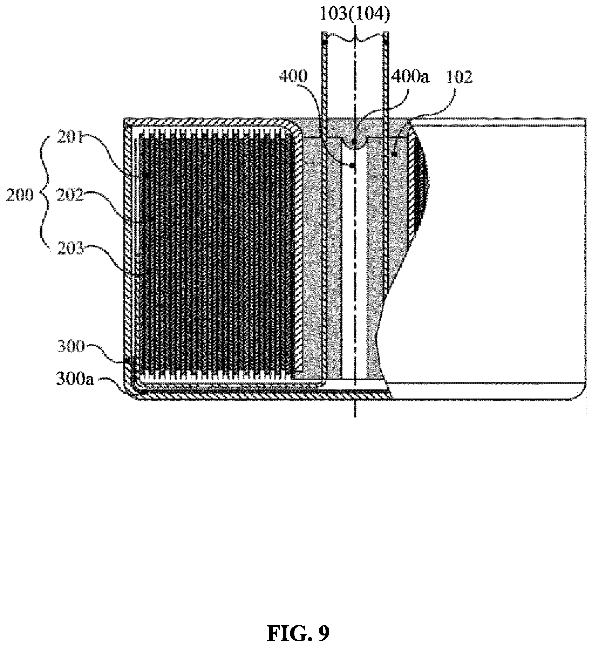

As shown in FIGS. **8** and **9****,** when the pin assembly of Example 1 is applied to a cell, the lower ends of the positive electrode lead **103** and the negative electrode lead **104** are electrically connected to the positive electrode and the negative electrode, respectively. Specifically, one of the following two connection modes is adopted:
1). As shown in FIG. 8, the lower ends of the positive electrode lead and the negative electrode lead are soldered to one end of a first intermediate conductorand one end of a second intermediate conductor, respectively; and the other end of the first intermediate conductor and the other end of the second intermediate conductorare soldered to the positive electrode or the negative electrode, respectively;
2). As shown in FIG. 9, the lower end of one electrode lead is soldered to the positive electrode or the negative electrode.

The cell of the disclosure comprises a central hole, at least one positive electrode **201,** at least one negative electrode **202,** and a diaphragm **203** separating the positive electrode and the negative electrode. The positive electrode **201,** the negative electrode **202** and the diaphragm **203** are disposed around the central hole in a spiral winding manner. The central hole has a diametergreater than 0 and smaller than that of the cell.

A layer of insulating tape **300-a** is disposed on the inner surface of the bottom end of the cell housing**300** to prevent short circuit between the positive electrode lead **103,** and the negative electrode lead **104** and the cell **housing300,** and furtherprevent the short circuit between the first transition conductor **204,** the second transition conductor **205** and the cell housing**300**.

During assembly, the insulating part **102** is disposed into the housing **101** by injection molding to completely wrap up the positive electrode lead **103**and the negative electrode lead **104** in the tube. Further, theliquid injection hole **400** is longitudinally disposed on the insulating part **102.** The liquid injection hole is sealed by the sealing member. The insulating part **102** is tightly attached to the inner wall of the tube. The tube is inserted into the central hole. The positive electrode lead **103**and the negative electrode lead **104**are bent outward and soldered to the first transition conductor **204** and the second transition conductor **205,** respectively. Thereafter, the joint of the hosing and the cell housing is sealed through laser soldering. The electrolyte is injected through the liquid injection hole **400** on the insulating part **102**into the cell. Thereafter, the liquid injection hole **400** is blocked, and the cell is then performed with general procedures such as formation and sorting to form a cylindrical chargeable and dischargeable secondary lithium-ion cell. In this way, the arrangement of the central hole of the pin assembly realizes the insulation and leading out of the positive and negative electrodes of the cell. The positive electrode lead **103** is the positive pole of the cell, and the negative electrode lead **104** is the negative pole of the cell, thus avoiding the occupation of space in the height direction or diameter direction for polarity separation.

It will be obvious to those skilled in the art that changes and modifications may be made, and therefore, the aim in the appended claims is to cover all such changes and modifications.

## Claims

1. A pin assembly for a cell, the cell comprising an electrode assembly comprising a central hole, and the pin assembly comprising:
a housing;
at least one electrode lead; and
an insulating part;
wherein:
the housingcomprises a tube comprising a top opening and a bottom opening; the tube is disposed in the central hole of the electrode assemblyof the cell;the insulating part is fully or partially disposed in the tube; the at least one electrode lead penetrates through the insulating part; a lower end ofthe at least one electrode leadis electrically connected to a positive electrode and/or a negative electrode of the cell, thereby leading out a polarity of the cell.

2. The pin assembly of claim 1, wherein the housing has a longitudinal section in the shape of "┐┌" and further comprises a disc-shaped flange extending outwardly from a top of the tube.

3. The pin assembly of claim1, wherein the housing has a longitudinal section in the shape of " 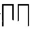 " and further comprises two circular tubes extending outwardly from two ends of a top of the tube.

4. The pin assembly of claim 1, wherein the housing has a longitudinal section in the shape of "II".

5. The pin assembly of claim1, wherein the cell comprises at least one positive electrode, at least one negative electrode, and at least one diaphragm separating the at least one positive electrode from the at least one negative electrode; the at least one positive electrode, the at least one negative electrode and the at least one diaphragm are disposed around the central hole in a spiral winding manner; and the central hole has a diameter of greater than 0 and smaller than that of the cell.

6. The pin assembly of claim 1, wherein the pin assembly is hermetically connected to a cell housing of the cell, thus forming a ring-shaped seal cavity for accommodating the electrode assembly.

7. The pin assembly of claim 1, wherein the insulating part has a longitudinal section in the shape of " 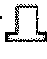 ", and comprises a columnar part inserted into the tube and an end cap that extends outwardly from a bottom of the columnar part to fully cover a lower end of the tube.

8. The pin assembly of claim 1, further comprising a liquid injection hole through which an electrolyte flows into the cell.

9. The pin assembly of claim8, wherein the liquid injection hole is disposed on the pin assembly and/or on the insulating part.

10. The pin assembly of claim 9, wherein theliquid injection hole penetrates through the insulating part, and is positioned at a center or eccentric position of the insulating part; and the liquid injection hole is sealed by a sealing member.

11. The pin assembly of claim 10, wherein the sealing member adopts one of the following structures:
the sealing member comprises an end cap structure; the end cap structure comprises an end and an embedded part disposed at the lower end of the end; the end covers the tube, and the embedded part is disposed in the tube; and
the sealing member comprises at least one steel ball; the at least one steel ball is disposed in the liquid injection hole in an interference fit.

12. The pin assembly of claim 11, wherein the pin assembly comprises a waterproof material.

13. The pin assembly of claim 12, wherein the waterproof material is a metal material or a non-metal material.

14. The pin assembly of claim 13, wherein the metal material is stainless steel, aluminum, or aluminum alloy.

15. The pin assembly of claim 13, wherein the non-metal material is ceramic or plastic.

16. The pin assembly of claim 1, wherein the insulating part comprises polypropylene.

17. The pin assembly of claim 1, wherein the at least electrode lead comprises an aluminum sheet or a nickel sheet.
